# FASCICULE DE BREVET EUROPEEN

(11) **EP 0 645 097 B1**
(45) Date de publication et mention de la délivrance du brevet: **23.05.2001**
(21) Numéro de dépôt: 94402100.5
(22) Date de dépôt: 21.09.1994
(51) Int. Cl.: A23L 1/325, A23P 1/08, A21D 13/00

(54) **Procédé de fabrication d'un aliment composite**
Verfahren zur Herstellung eines kompositorischen Nahrungsmittels
Process for manufacturing a composite foodstuff

(30) Priorité: 29.09.1993 FR 9311559
(43) Date de publication de la demande: 29.03.1995
(73) Titulaire: NEPTUNE Société Anonyme, F-78220 Viroflay (FR)
(72) Inventeur: Jouxtel, Jean-Claude, F-50500 Carentan (FR)
(74) Mandataire: Orès, Bernard

(56) Documents cités:
- EP-A- 0 194 780
- BE-A- 1 002 445
- FR-A- 2 491 431
- FR-A- 2 559 649
- GB-A- 2 129 668
- GB-A- 2 156 649

## Description

La présente invention se rapporte principalement à un procédé de fabrication d'un aliment composite et à un aliment obtenu par ledit procédé.

On connaît, par la Demande de Brevet Français n° 80 21871, un procédé pour mouler, cuire et emballer des viandes et des charcuteries du type jambons, jambonneaux, épaules ou pâtés, qui prévoit de placer ces produits dans un emballage plastique muni de moyens de fermeture étanche et apte à permettre à la fois leur mise en forme, leur cuisson et leur emballage pour leur commercialisation.

Par ailleurs, pour conférer aux aliments un aspect, une forme ou des qualités organoleptiques particulières, l'on peut avoir recours à des aliments composites.

Par exemple, le Brevet Belge n° 1 002 445 décrit un procédé de préparation d'une tourte de viande, dans lequel on dépose successivement dans un récipient, une première couche de pâte, une viande préalablement cuite dans une marinade et accompagnée de sauce, et une deuxième couche de pâte.

Egalement, on connaît, par la Demande de Brevet Britannique n° 2 156 649, un procédé pour fabriquer des aliments en forme de feuilles solides, éventuellement composées de plusieurs couches superposées, à partir d'ingrédients liquides, semi-liquides ou pâteux, tels qu'une sauce pizza, du ketchup, de la mayonnaise, de la sauce tartare, de la sauce blanche, de la moutarde, de l'huile, du vinaigre, de la crème anglaise, de la confiture ou encore de la marmelade. Ce procédé prévoit de mélanger ce ou ces ingrédients avec un ou plusieurs agents gélifiants, de déposer le mélange résultant dans un emballage de forme et de dimensions appropriées, et de refroidir, voire de congeler le tout de manière à obtenir une solidification dudit mélange. Le produit ainsi solidifié est découpé en feuilles aux dimensions désirées. Ces feuilles sont alors déposées dans un second emballage dans lequel elles sont éventuellement associées à d'autres feuilles de matières comestibles telles que des feuilles de fromage, et, après fermeture de cet emballage, l'ensemble est soumis à une stérilisation pour sa conservation.

Pour fabriquer un pâté en croûte, l'on réalise tout d'abord les éléments constitutifs, c'est-à-dire une pâte formant la croûte ainsi que le pâté. La pâte est mise en forme et farcie avec le pâté puis l'ensemble est mis à cuire à pression atmosphérique et à une température typiquement comprise entre 180 et 210°C permettant le dorage de la pâte mais entraînant la perte en eau et donc une diminution du volume du pâté. En fin de cuisson, le pâté n'adhère pas aux parois internes de la croûte et la liaison mécanique entre ces deux éléments est obtenue par une injection de gelée après cuisson.

Dans le cas du saucisson brioché, on incorpore un saucisson précuit enrobé dans un gel protéique, typiquement à base d'oeuf, dans une pâte. La cuisson de l'ensemble est réalisée à pression atmosphérique, à une température supérieure à 200°C. Le gel protéique ajouté avant cuisson assure la cohésion de l'ensemble.

La fabrication de ce dernier type d'aliments composites, pâté en croûte et saucisson brioché, présente de nombreux inconvénients. Le pâté en croûte et le saucisson brioché nécessitent la mise en oeuvre d'un agent collant pour assurer la cohésion de l'aliment. De plus, le traitement thermique de l'ensemble n'est qu'un compromis entre le traitement thermique exigé par la farce et le traitement thermique exigé par la pâte.

La cuisson de ces produits n'étant pas réalisée dans un emballage hermétique, une contamination microbiologique après la cuisson ne peut pas être tout à fait exclue.

C'est par conséquent un but de la présente invention d'offrir un procédé de fabrication d'un aliment susceptible d'être manipulé sans détérioration et d'être découpé en tranches fines.

C'est également un but de la présente invention d'offrir un procédé de fabrication d'un aliment ayant une longue durée de conservation.

C'est aussi un but de la présente invention d'offrir un aliment présentant un aspect agréable.

C'est également un but de la présente invention d'offrir un procédé de fabrication d'un aliment comportant une pâte et une farce, chacune ayant subi un traitement thermique optimal.

Ces buts sont atteints selon l'invention par un procédé comportant les étapes consistant à :
- dorer la pâte lors d'une cuisson préalable, à une température appropriée ;
- disposer la pâte et la farce dans un emballage ;
- emballer sous vide et sceller l'emballage contenant la pâte et la farce ;
- cuire l'aliment comportant la pâte et la farce dans l'emballage à une température ne dégradant pas les propriétés organoleptiques de la farce.

L'aliment obtenu par la mise en oeuvre du procédé de la présente invention a une cohésion suffisante pour pouvoir être découpé en tranches fines, dont l'épaisseur est inférieure ou égale à 1 cm, par exemple égale à 5 mm, pouvant atteindre 3 mm.

L'invention a principalement pour objet un procédé de fabrication d'un aliment, caractérisé en ce qu'il comporte les étapes consistant à :
a) fabriquer une feuille comestible, solide ou élastique, dans une pâte levée à base de farine ;
b) fabriquer une farce ;
c) disposer la feuille dans un emballage ;
d) remplir l'emballage avec la farce avec contact entre la farce et une des faces principales de la feuille ;
e) sceller sous vide l'emballage, notamment avec un opercule en matière plastique ;
f) cuire l'aliment dans son emballage scellé sous vide.

L'invention a également pour objet un procédé, caractérisé en ce que l'on dispose deux feuilles sensiblement parallèles sur deux faces opposées de l'aliment.

L'invention a également pour objet un procédé, caractérisé en ce que la feuille est réalisée dans une pâte de type blinis.

L'invention a également pour objet un procédé, caractérisé en ce que, à l'étape a), on effectue une cuisson de la feuille, notamment un dorage de la pâte levée.

L'invention a également pour objet un procédé, caractérisé en ce qu'il comporte, à l'étape a), la formation d'irrégularités sur la surface de la face principale de la feuille devant entrer en contact avec la farce.

L'invention a également pour objet un procédé, caractérisé en ce que, à l'étape b), on réalise une farce comportant 7 à 10% en poids de protéines.

L'invention a également pour objet un procédé, caractérisé en ce que la farce est fluide avant cuisson; notamment une pâte fine à base de poisson.

L'invention a également pour objet un procédé, caractérisé en ce que, à l'étape f), on effectue la cuisson à une température inférieure ou égale à 90°C.

L'invention a également pour objet un procédé, caractérisé en ce que, à l'étape f), on effectue une cuisson sous une pression supérieure à la pression ambiante.

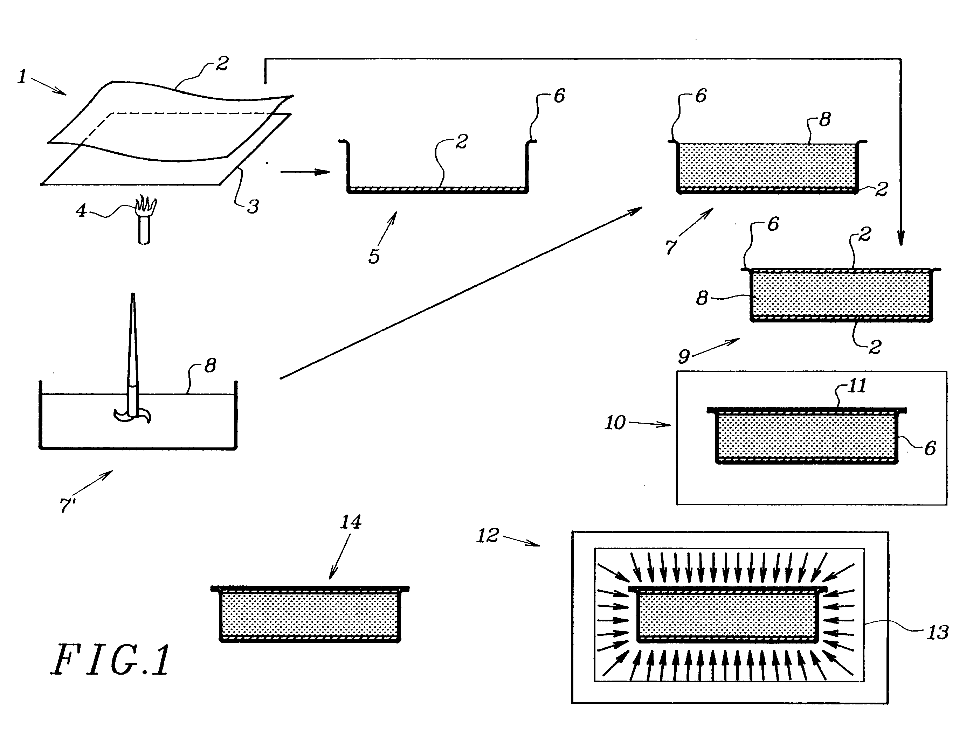

L'invention sera mieux comprise au moyen de la figure annexée donnée comme un exemple non limitatif et représentant un synoptique de l'exemple préféré de mise en oeuvre du procédé selon la présente invention.

Selon l'invention, on dispose au moins une feuille comestible solide ou élastique, de pâte levée à base de farine ainsi qu'une farce moulable dans un emballage, dont on assure le scellement sous vide, et l'on assure la cuisson de l'aliment dans son emballage.

Avantageusement, la feuille comestible est un blinis, avantageusement comportant une surface irrégulière du coté de la farce pour améliorer l'accrochage de la farce sur le blinis.

Avantageusement, avant son introduction dans l'emballage, la pâte est cuite, notamment dorée.

Avantageusement, la farce est fluide au moment de sa mise en contact avec la pâte. La farce est par exemple réalisée par une pâte fine émulsionnée notamment à base de poisson ou de viande. On peut, par exemple, utiliser une pâte fine de poisson ayant la composition suivante :
- chair de poisson : 25 à 35 % en poids,
- crème fraîche : 25 à 35 % en poids,
- eau : 10 à 20 % en poids,
- huile : 10 à 15 % en poids,
- oeuf entier : 5 à 8 % en poids,
- assaisonnement (épices, aromates, etc...) : 2 à 5 %.

Le taux de protéine est, par exemple, compris entre 7 et 14 % en poids.

La farce peut être décorée. Par exemple, une pâte fine de poisson peut être décorée avec des oeufs de poisson colorés aléatoirement répartis dans la masse.

En 1, on assiste à la cuisson d'un blinis 2 sur une plaque 3 chauffée par exemple par une flamme 4.

Avantageusement, le blinis 2, ou toute autre feuille comestible comporte une face d'accrochage irrégulière comprenant par exemple des aspérités et des cavités réparties de façon aléatoire. Par exemple, la pâte levée contenant du gaz carbonique est cuite sur une plaque chauffante 3 portée à une température élevée et munie d'un film d'huile.

La face du blinis 2 dirigée vers la plaque chauffante 3 avant retournement présente un aspect lisse très agréable. Le gaz carbonique chauffé à haute température en se dilatant forme dans la pâte des cheminées verticales débouchant sur la face opposée à la plaque. Ces cheminées d'échappement du gaz carbonique forment des aspérités profondes d'accrochage de la farce.

Avantageusement, la seconde face du blinis, opposée à la face d'accrochage est plus lisse pour présenter un aspect et une texture agréables.

En 5, on dépose le blinis dans un emballage alimentaire 6 par exemple dans une barquette en polypropylène.

En 7, la barquette est remplie avec la farce 8, préparée à l'étape 7', par exemple avec une pâte fine de saumon comportant divers éléments décoratifs comme par exemple des oeufs de poisson colorés répartis aléatoirement dans la masse et comportant à la moitié de l'épaisseur une pâte fine de saumon colorée (non représentée).

En 9, on dispose sur la farce 8 un second blinis 2.

En 10, on effectue l'emballage sous vide de la barquette 6 avec scellement hermétique avec un opercule 11, par exemple en matière plastique.

En 12, on effectue une cuisson de l'aliment scellé sous vide, avantageusement dans un autoclave 13 dans lequel la pression est par exemple supérieure de 1,2 10⁵ Pa à la pression ambiante. La haute pression dans l'autoclave améliore encore la cohésion de l'aliment selon la présente invention. Il est bien entendu qu'une pluralité de barquettes 6 garnies avec l'aliment selon la présente invention peuvent être cuites simultanément dans l'autoclave 13. La cuisson dure par exemple 2 h 30 mn à une température comprise entre 85 et 90° C.

Ce temps de cuisson confère des qualités organoleptiques optimales, par exemple, à un bloc de terrine de saumon ayant 20 cm sur 20 cm sur 4 cm et pesant 1,5 kg. En variante, on dispose des portions individuelles, par exemple de 50, 100 ou 150 g, dans des barquettes de dimensions appropriées. Les barquettes peuvent éventuellement être groupées avec un suremballage en vue de leur commercialisation. De même, la réalisation de portions à trancher par le consommateur dont la masse unitaire est, par exemple, comprise entre 150 et 400 g ne sort pas du cadre de la présente invention.

De plus, on a détruit dans l'aliment scellé hermétiquement dans son emballage toute la flore végétative pathogène, sans risques de contamination microbiologique ultérieure. Ainsi, le produit peut se conserver à des températures comprises entre 0 et 3° C pendant de longues périodes pouvant atteindre et excéder 42 jours.

En 14, on tient un aliment prêt à être consommé, présentant une longue durée de conservation avant l'ouverture de la barquette 6, susceptible d'être coupé en tranches fines de l'ordre de 1 cm ou moins ayant un aspect agréable et des qualités organoleptiques remarquables. La présence des blinis 2, ou d'autres types de feuilles comestibles, confère à l'aliment selon la présente invention des qualités mécaniques permettant sa manipulation manuelle.

Il est bien entendu que la présente invention n'est pas limitée à un produit de type sandwich comportant un blinis sur chaque face principale du produit. Au contraire, le produit comportant une feuille unique sur une seule face du produit, une ou plusieurs feuilles disposées dans l'épaisseur du produit, associées ou non à des feuilles sur les faces externes, ne sort pas du cadre de la présente invention.

De même, l'invention n'est pas limitée à la production de blocs de taille importante mais englobe également des barquettes renfermant des portions individuelles.

Il est bien entendu que l'on peut, sans sortir du cadre de la présente invention, mettre en oeuvre des feuilles comestibles de diverses matières solides ou élastiques comme par exemple du pain de mie ainsi que divers types de farce. Le temps, la température et l'éventuelle pression de la cuisson sont déterminés d'après le type de farce employée.

L'invention s'applique notamment à l'industrie alimentaire.

L'invention s'applique principalement à l'industrie de transformation du poisson et de la viande.

## Revendications

1. Procédé de fabrication d'un aliment, caractérisé en ce qu'il comporte les étapes consistant à :
a) fabriquer une feuille comestible, solide ou élastique (2) dans une pâte levée à base de farine ;
b) fabriquer une farce (8) ;
c) disposer la feuille (2) dans un emballage ;
d) remplir l'emballage (6) avec la farce (8) avec contact entre la farce (8) et une des faces principales de la feuille (2) ;
e) sceller sous vide l'emballage (6), notamment avec un opercule en matière plastique (11);
f) cuire l'aliment dans son emballage (6) scellé sous vide.

2. Procédé selon la revendication 1, caractérisé en ce que l'on dispose deux feuilles (2) sensiblement parallèles sur deux faces opposées de l'aliment.

3. Procédé selon la revendication 1 ou 2, caractérisé en ce que la feuille (2) est réalisée dans une pâte levée de type blinis.

4. Procédé selon l'une quelconque des revendications 1 à 3, caractérisé en ce que, à l'étape a), on effectue une cuisson de la feuille (2), notamment un dorage de la pâte levée.

5. Procédé selon la revendication 4, caractérisé en ce qu'il comporte, à l'étape a), la formation d'irrégularités sur la surface de la face principale de la feuille (2) devant entrer en contact avec la farce (8).

6. Procédé selon l'une quelconque des revendications précédentes, caractérisé en ce que, à l'étape b), on réalise une farce comportant 7 à 10% en poids de protéines.

7. Procédé selon l'une quelconque des revendications précédentes, caractérisé en ce que la farce (8) est fluide avant cuisson, notamment une pâte fine à base de poisson.

8. Procédé selon l'une quelconque des revendications précédentes, caractérisé en ce que, à l'étape f), on effectue la cuisson à une température inférieure ou égale à 90°C.

9. Procédé selon l'une quelconque des revendications précédentes, caractérisé en ce que, à l'étape f), on effectue une cuisson sous une pression supérieure à la pression ambiante.

## Patentansprüche

1. Verfahren zur Herstellung eines Lebensmittels, dadurch gekennzeichnet, dass es die folgenden Stufen umfasst:
a) Herstellen einer festen oder elastischen essbaren Folie (2) in einem aufgegangenen Teig auf der Grundlage von Mehl;
b) Herstellen einer Farce (8);
c) Einbringen der Folie (2) in eine Umhüllung;
d) Füllen der Umhüllung (6) mit Farce (8) mit Kontakt zwischen der Farce (8) und einer der Hauptseiten der Folie (2);
e) Versiegeln der Umhüllung (6) im Vakuum, insbesondere mit einem Deckel aus Kunststoffmaterial (11);
f) Kochen des im Vakuum versiegelten Lebensmittels in dessen Umhüllung (6).

2. Verfahren nach Anspruch 1, dadurch gekennzeichnet, dass man die zwei Folien (2) deutlich parallel auf zwei aufeinander gegenüberliegenden Seiten des Lebensmittels anbringt.

3. Verfahren nach Anspruch 1 oder 2, dadurch gekennzeichnet, dass die Folie (2) aus bzw. in einem aufgegangenen Teig vom Typ Blinis hergestellt wird.

4. Verfahren nach einem der Ansprüche 1 bis 3, dadurch gekennzeichnet, dass man in Stufe a) die Folie (2) kocht, wobei man insbesondere den aufgegangenen Teig mit Eigelb bestreicht.

5. Verfahren nach Anspruch 4, dadurch gekennzeichnet, dass man in Stufe a) Unregelmäßigkeiten auf der Oberfläche der Hauptseite der Folie (2), bevor sie mit der Farce (8) in Kontakt tritt, bildet.

6. Verfahren nach einem der vorstehenden Ansprüche, dadurch gekennzeichnet, dass man in Stufe b) eine Farce, die 7 bis 10 Gewichtsprozent Proteine umfasst, herstellt.

7. Verfahren nach einem der vorstehenden Ansprüche, dadurch gekennzeichnet, dass die Farce (8) vor dem Kochen flüssig ist, insbesondere eine feine Pastete auf der Basis von Fisch ist.

8. Verfahren nach einem der vorstehenden Ansprüche, dadurch gekennzeichnet, dass man in Stufe f) bei einer Temperatur von kleiner oder gleich 90°C kocht.

9. Verfahren nach einem der vorstehenden Ansprüche, dadurch gekennzeichnet, dass man in Stufe f) bei einem Druck über Umgebungsdruck kocht.

## Claims

1. A method of manufacturing a food product, characterised in that it incorporates the following steps, consisting in:
a) manufacturing an edible sheet, which may be solid or elastic (2), from a raised dough with a flour base;
b) manufacturing a stuffing (8);
c) arranging the sheet (2) to form a casing;
d) filling the casing (6) with the stuffing (8), the stuffing (8) being placed in contact with one of the main faces of the sheet (2);
e) vacuum-sealing the casing (6), in particular with a seal made from a plastics material (11);
f) cooking the food product in its vacuum-sealed casing (6).

2. Method as claimed in claim 1, characterised in that two substantially parallel sheets (2) are disposed on two opposing faces of the food product.

3. Method as claimed in claim 1 or 2, characterised in that the sheet (2) is formed from a raised dough of the blini type.

4. Method as claimed in any one of claims 1 to 3, characterised in that at step a), the sheet (2) is cooked, in particular the raised dough is browned.

5. Method as claimed in claim 4, characterised in that it includes, at step a), the formation of irregularities on the surface of the main face of the sheet (2) which is intended to be placed in contact with the stuffing (8).

6. Method as claimed in any one of the preceding claims, characterised in that, at step b), a stuffing containing 7 to 10% by weight of proteins is prepared.

7. Method as claimed in any one of the preceding claims, characterised in that the stuffing (8) is fluid prior to cooking, in particular a fine paste with a fish base.

8. Method as claimed in any one of the preceding claims, characterised in that, at step f), cooking is effected at a temperature below or equal to 90°C.

9. Method as claimed in any one of the preceding claims, characterised in that, at step f), cooking is effected at a pressure higher than the ambient pressure.
